**Europäisches Patentamt**

**European Patent Office**

**Office européen des brevets**

(19)

(11) Veröffentlichungsnummer: **0 011 253**

**A1**

(12) # EUROPÄISCHE PATENTANMELDUNG

(21) Anmeldenummer: **79104414.2**

(22) Anmeldetag: **09.11.79**

(51) Int. Cl.³: **G 02 F 1/133**
**G 02 F 1/01**

(30) Priorität: **17.11.78 DE 2849835**

(43) Veröffentlichungstag der Anmeldung:
**28.05.80 Patentblatt 80/11**

(84) Benannte Vertragsstaaten:
**CH DE FR GB IT**

(71) Anmelder: **International Standard Electric Corporation,
New York
320 Park Avenue
New York 22, N.Y.(US)**

(84) Benannte Vertragsstaaten:
**CH FR GB IT**

(71) Anmelder: **Standard Elektrik Lorenz Aktiengesellschaft
Hellmuth-Hirth-Strasse 42
D-7000 Stuttgart 40(DE)**

(84) Benannte Vertragsstaaten:
**DE**

(72) Erfinder: **Koger, Kurt
Theodor-Storm-Strasse 31
D-7141 Oberriexingen(DE)**

(72) Erfinder: **Wessel, Gerhard
Edisonstrasse 32
D-7000 Stuttgart 40(DE)**

(72) Erfinder: **Pottharst, Jürgen, Dr.
Onstmettinger Weg 9
D-7000 Stuttgart-Möhringen(DE)**

(74) Vertreter: **Thul, Leo, Dipl.-Phys.
Kurze Strasse 8 Postfach 300 929
D-7000 Stuttgart 30(DE)**

(54) **Elektrooptische Anzeigevorrichtung und Verfahren zu ihrer Herstellung.**

(57) Elektrooptische Anzeigevorrichtung mit zwei Elektroden (3,4) tragende Glasplatten (1,2) und einem dazwischen angeordneten flüssigen oder halbflüssigen elektrooptischen Material (6). Dieses ist in einem flachen Beutel (5) aus transparenten Kunststoffolien angeordnet. Es können Beutel mit unterschiedlichem elektrooptischen Material zwischen einem Paar von Glasplatten angeordnet sein.

Leichte Herstellung von grossen Displays. Keine Abdichtung zwischen den Glasplatten erforderlich.

Fig.1

... ... ... ...
Postfach ... ... ... Str. 5
D-7000 Stuttgart 30, Deutschland

0011253

## Elektrooptische Anzeigevorrichtung

Die Erfindung bezieht sich auf eine elektrooptische Anzeigevorrichtung, bei der zwischen mit Leitern beschichteten Platten,
von denen mindestens eine aus lichtdurchlässigem Material besteht
und mit einem lichtdurchlässigen Elektrodenmuster beschichtet ist,
eine Schicht aus flüssigem oder halbflüssigem elektrooptischem
Material angeordnet ist, das unter Einwirkung eines elektrischen
Feldes seine optischen Eigenschaften ändert, sowie auf ein Verfahren zur Herstellung einer solchen Anzeigevorrichtung.

Es sind bereits verschiedene elektrooptische Anzeigevorrichtungen
bekannt, bei denen zwischen zwei mit Leitern beschichteten Platten eine dünne Schicht aus elektrooptischem Material angeordnet
ist. Von den Platten besteht mindestens eine aus lichtdurchlässigem Material und die darauf angeordnete Elektrode ist ebenfalls
lichtdurchlässig. Eine von beiden Elektroden besteht aus einem
Elektrodenmuster, d. h. aus einzelnen Segmenten, die mit elektrischen Zuleitungen versehen sind. Es können aber auch die Leiter
auf beiden Platten aus Elektrodenmustern bestehen. Durch Anlegen
einer Spannung zwischen zwei einander gegenüberliegenden Elektrodenflächen wird ein elektrisches Feld erzeugt, das bewirkt, daß
das dazwischen angeordnete elektrooptische Material seine optischen
Eigenschaften ändert. Eine solche optische Änderung kann in einer
Änderung der Lichtdurchlässigkeit, einer Änderung der reflektierenden Eigenschaften oder auch in einer Farbänderung bestehen.
Als elektrooptisches Material können  sogenannte Flüssigkristalle
verwendet werden oder auch kolloide Lösungen, welche im elektri-

...

0011253

schen Feld ihre optischen Eigenschaften ändern.

Bisher hat man das elektrooptische Material zwischen starre Platten aus Glas oder Kunststoff eingebracht, die auf der einander zugewandten Seite mit entsprechenden Elektroden bzw. Elektrodenmustern beschichtet waren. Das elektrooptische Material muß hierbei in einer sehr dünnen Schicht möglichst gleichmäßiger Dicke vorliegen. Bei der Herstellung solcher Anzeigevorrichtungen treten insofern Schwierigkeiten auf, weil die Platten am Rande dicht miteinander verbunden werden müssen, so daß ein Auslaufen des elektrooptischen Materials verhindert wird. So werden beispielsweise mit Elektroden beschichtete Glasplatten am Rande mit einem Glasfluß miteinander verbunden, wozu jedoch die Einwirkung höherer Temperaturen erforderlich ist. Hierbei wird aber leicht das dazwischen eingebrachte elektrooptische Material in ungünstiger Weise beeinflußt. Weiter kommt bei den bekannten elektrooptischen Anzeigevorrichtungen das Elektrodenmaterial mit dem elektroop-tischen Material in Kontakt, so daß auch hierdurch eine ungünstige Beeinflussung des elektrooptischen Materials eintreten kann. Das Elektrodenmaterial kann daher nicht nach seinen elektrischen Eigenschaften allein ausgewählt werden, sondern es müssen seine Einflüsse auf das elektrooptische Material berücksichtigt werden. Es ist weiter bekannt, daß das mit dem elektrooptischen Material in Kontakt kommende Plattenmaterial einen großen Einfluß auf die elektrooptischen Eigenschaften hat. Es ist daher in vielen Fällen erforderlich, daß die Platten innen noch einer besonderen Beschichtung unterworfen werden müssen, und daß nicht beliebiges Plattenmaterial in Kontakt mit dem elektrooptischen Material gebracht werden darf.

...

J.Wenzel-J.Borchardt-H.Koger 24-3-1                    0011253

Ferner lassen sich die bekannten elektrooptischen Anzeigevorrichtungen nicht ohne weiteres wieder öffnen, um beispielsweise das
elektrooptische Material auswechseln zu können oder bei einer unbrauchbaren Zelle wiedergewinnen zu können.

Schließlich ist es schwierig, zwischen starre Platten eine dünne
Schicht aus elektrooptischem Material einzubringen, ohne daß Luftblasen mit eingeschlossen werden. Deshalb hat man bisher auch nur
elektrooptische Anzeigevorrichtungen aus ebenen Platten hergestellt, weil das blasenfreie Einbringen von elektrooptischem Material zwischen gewölbte Platten auf sehr große Schwierigkeiten
stößt.

Der Erfindung liegt die Aufgabe zugrunde, eine elektrooptische
Anzeigevorrichtung zu schaffen, bei der das elektrooptische Material von den mit Elektroden beschichteten Platten getrennt ist.
Ihr liegt die weitere Aufgabe zugrunde, ein Verfahren zur Herstellung einer solchen Vorrichtung anzugeben.

Die obengenannte Aufgabe wird dadurch gelöst, daß das elektrooptische Material sich in einem zwischen den Platten angeordneten
flachen Beutel aus transparentem Kunststoff befindet.

Hierdurch erübrigt es sich, daß die beiden Platten am Rande dicht
miteinander verbunden werden müssen und es wird vermieden, daß
das elektrooptische Material mit dem Material der Platten oder
dem Elektrodenmaterial in Kontakt kommt. Der Beutel mit dem elektrooptischen Material kann leicht ausgewechselt werden und bei
unbrauchbaren Vorrichtungen kann das elektrooptische Material
leicht wiedergewonnen werden.

...

0011253

Die Erfindung soll anhand der Figuren näher beschrieben werden.

Die Figuren 1 - 3 zeigen im Schnitt verschiedene Ausführungsformen der Erfindung.

In Figur 4 ist schematisch das Verfahren der mit elektrooptischem Material gefüllten Beutel dargestellt.

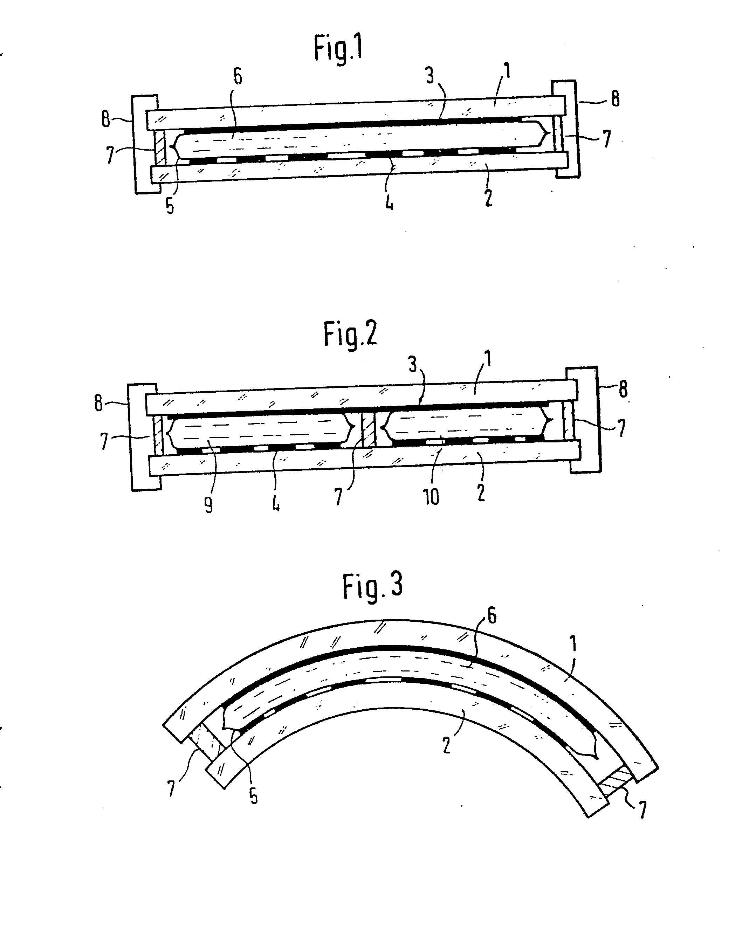

Bei der Ausführungsform nach Figur 1 sind zwei Platten 1 und 2 aus durchsichtigem Material vorgesehen, von denen die Platte 1 mit einer durchgehenden Elektrode 3 (oder einem Elektrodenmuster) und die Platte 2 mit einem Elektrodenmuster 4 beschichtet sind. Zwischen den beiden einander mit den Elektroden zugewandten Platten 1 und 2 ist der Kunststoffbeutel 5 angeordnet, der das elektrooptische Material 6 enthält. Das Material 6 ist in dem dicht verschweißten Beutel 5 enthalten, und kommt weder mit dem Material der Elektroden 3 und 4 noch mit dem Plattenmaterial der Platten 1 und 2 in Kontakt. Bei der Herstellung einer solchen Vorrichtung wird der Beutel zwischen die Platten 1 und 2 gelegt, welche durch Abstandsstücke 7 auf einem bestimmten definierten Abstand gehalten werden. Durch geeignete Klemmvorrichtungen 8 werden die beiden Platten 1 und 2 zusammengehalten. Der Beutel 5 hat eine sehr geringe Dicke, so daß beispielsweise das elektrooptische Material zwischen den Platten 1 und 2 in einer Schichtdicke von etwa 50 µm vorhanden ist. Die Elektroden 3 und 4 können aus beliebigem Material bestehen, das nach seiner elektrischen Leitfähigkeit und zur Erzielung eines optimalen Kontrastes ausgewählt wird, wie z. B. aus Kupfer, Aluminium, Gold oder ähnlichem Material.

...

0011253

Das elektrooptische Material 6 kann aus einem Flüssigkristallmaterial bestehen oder einer entsprechenden Kolloidsuspension.

Bei der Ausführungsform von Figur 2 sind zwischen den Platten 1 und 2 zwei Beutel 9 und 10 mit elektrooptischem Material angeordnet und zwischen den Beuteln ist ein weiteres Abstandsstück 7 vorgesehen. Bei großflächigen Anzeigevorrichtungen können so zwi-schen den Platten an mehreren Stellen Abstandssstücke vorgesehen sein, die durch die Aufteilung des elektrooptischen Materials in verschiedene nebeneinanderliegende Beutel nicht mit dem elektrooptischen Material in Kontakt kommen.

Bei dieser Ausführungsform können auch verschiedene Beutel mit unterschiedlichem Material oder mit einem Material unterschiedlicher Färbung gefüllt sein. Auf diese Weise läßt sich eine Anzeigevorrichtung mit unterschiedlichem elektrooptischem Material sehr leicht verwirklichen.

In Figur 3 ist eine Anordnung gemäß der Erfindung dargestellt, bei der die beiden Platten 1 und 2 gebogen sind. Ein blasenfreies Einfüllen von elektrooptischem Material zwischen zwei gewölbte Platten läßt sich ohne die Verwendung von Beuteln gemäß der Erfindung nur unter großen Schwierigkeiten erreichen. Durch die Verwendung von mit elektrooptischem Material gefüllten Kunststoffbeuteln lassen sich auch Anzeigevorrichtungen mit gebogenen Platten ohne weiteres verwirklichen.

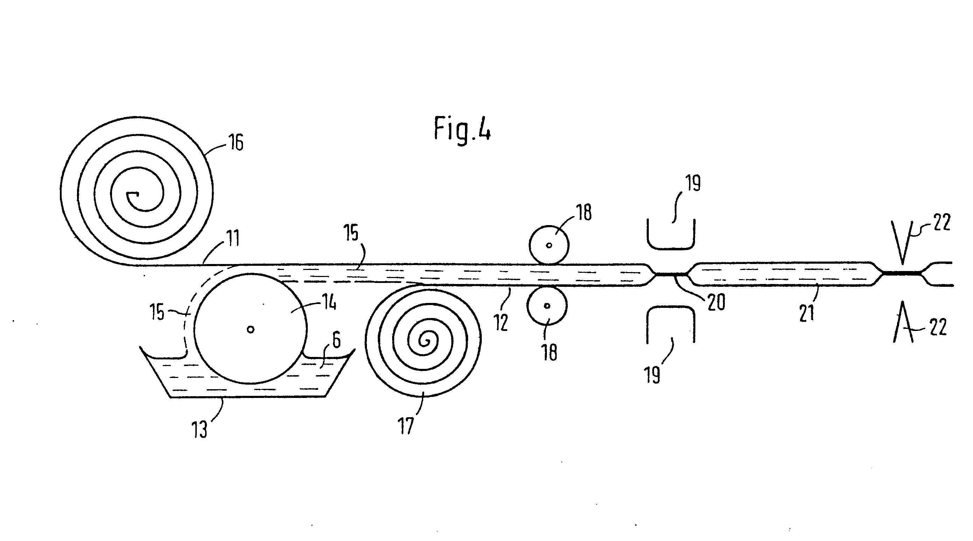

In Figur 4 ist schematisch ein Teil des Herstellungsverfahrens für elektrooptische Vorrichtungen gemäß der Erfindung dargestellt. Von einer Vorratsrolle 16 wird ein Folienband 11 abgerollt und mittels der in den Behälter 13 eintauchenden Rolle 14 mit einer

...

aus dem elektrooptischen Material 6 beschichtet. Auf diese Schicht wird das von einer Vorratsrolle 17 abgerollte Folienband 12 aufgelegt und an beiden Rändern mittels einer Schweißvorrichtung 18 fortlaufend mit dem ersten Band 11 verschweißt. In Abständen wird mit der Schweißvorrichtung 19 eine Querverschweißung 20 der beiden Folienränder 11 und 12 vorgenommen, so daß einzelne flache Beutel 21 mit elektrooptischer Flüssigkeit erhalten werden. Mittels einer Schneidevorrichtung 22 werden die einzelnen Beutel innerhalb der Schweißnaht 20 voneinander getrennt. Diese werden dann zwischen zwei Platten eingebracht, welche an der Innenseite mit entsprechenden Elektroden und Elektrodenmustern beschichtet sind, wie dies zuvor beschrieben wurde.

Auf diese Weise lassen sich sehr einfach elektrooptische Vorrichtungen gemäß der Erfindung herstellen.

G.Wessel-J.Pottharst-K.Koger 24-3-1

Ansprüche:

1) Elektrooptische Anzeigevorrichtung, bei der zwischen mit Leitern beschichteten Platten, von denen mindestens eine aus
lichtdurchlässigem Material besteht und mit einem lichtdurchlässigen Elektrodenmuster beschichtet ist, eine Schicht eines
flüssigen oder halbflüssigen elektrooptischen Materials angeordnet ist, das unter Einwirkung eines elektrischen Feldes
seine optischen Eigenschaften ändert, dadurch gekennzeichnet,
daß das elektrooptische Material (6) sich in einem zwischen
den Platten angeordneten flachen Beutel (5,9,10) aus transparentem Kunststoff befindet.

2) Elektrooptische Anzeigevorrichtung nach Anspruch 1, dadurch
gekennzeichnet, daß der Beutel (5,9,10) aus am Rande miteinander verschweißten Kunststoffolien (11,12) besteht.

3) Elektrooptische Anzeigevorrichtung nach Anspruch 1 und 2,
dadurch gekennzeichnet, daß zwischen zwei Platten (1,2) mehrere Beutel (9,10) nebeneinander angeordnet sind.

4) Elektrooptische Anzeigevorrichtung nach Anspruch 3, dadurch
gekennzeichnet, daß zwischen den einzelnen Beuteln (9,10)
Abstandskörper (7) zwischen den Platten (1,2) angeordnet sind.

5) Elektrooptische Anzeigevorrichtung nach Anspruch 3 und 4,
dadurch gekennzeichnet, daß die einzelnen Beutel (9,10) elektrooptisches Material (6) unterschiedlicher Zusammensetzung
und/oder Färbung enthalten.

...

0011253

G.Wessel-J.Pottharst-K.Koger 24-3-1

6) Elektrooptische Anzeigevorrichtung nach Anspruch 1 - 5,
   dadurch gekennzeichnet, daß die mit dem elektrooptischen
   Material (6) gefüllten Beutel (5,9,10) zwischen gewölbten
   Platten (1,2) angeordnet sind.

7) Verfahren zur Herstellung von elektrooptischen Anzeigevorrichtungen nach einem der Ansprüche 1 - 6, dadurch gekennzeichnet, daß das elektrooptische Material (6) laufend
   zwischen zwei endlose Folienbahnen (11,12) eingebracht wird,
   die an den Rändern in Längsrichtung laufend verschweißt werden, daß die beiden Folienbahnen (11,12) in Abständen quer
   zur Längsrichtung miteinander verschweißt werden, daß die so
   gebildeten mit elektrooptischem Material (6) gefüllten Beutel
   (21) längs der Querverschweißungen abgetrennt und zwischen
   zwei mit Leitern beschichtete Platten eingebracht werden.

8) Verfahren nach Anspruch 7, dadurch gekennzeichnet, daß das
   elektrooptische Material (6) in der Weise zwischen die beiden
   Folienbahnen eingebracht wird, daß das elektrooptische Material (6) in dünner Schicht (15) laufend auf die eine Folienbahn (11) aufgebracht wird, wonach die zweite Folienbahn (12)
   unter Vermeidung von Lufteinschlüssen aufgelegt wird.

0011253

Fig.1

Fig.2

Fig.3

Fig.4

Europäisches
Patentamt

**EUROPÄISCHER RECHERCHENBERICHT**

0011253
Nummer der Anmeldung

EP 79 10 4414

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 1 929 256 (VARI-LIGHT) <br> ✻ Seite 18, letzter Absatz; Seite 25, Mitte; Figuren 5,6 ✻ <br><br> -- | 1,2 |
| | PATENT ABSTRACTS OF JAPAN, Band 1, Nr. 38, 19. April 1977, Seite 2249 E 76 <br> & JP - A - 51 135552 <br> ✻ Zusammenfassung ; Figur 2 ✻ <br><br> -- | 1-3 |
| A | FR - A - 2 123 338 (SIEMENS) <br> ✻ Seite 3, Zeile 32 - Seite 4, Zeile 31; Ansprüche 1,12,13 ✻ <br><br> -- | 1-3 |
| A | US - A - 4 064 872 (S. CAPLAN) <br> ✻ Spalte 3, Zeile 60 - Spalte 5, Zeile 13; Spalte 7, Zeile 20 - Spalte 8, Zeile 15; Figuren 1-3 ✻ <br><br> -- | 1-3,5, 7,8 |
| A | DE - A - 1 959 563 (MERCK PATENT) <br> ✻ Seite 2, letzter Absatz; Seiten 3-5 ✻ <br><br> -- | 1 |
| A | PATENT ABSTRACTS OF JAPAN, Band 2, Nr. 55, 21. April 1978, Seite 1274 E 78 <br> & JP - A - 53 19042 <br> ✻ Zusammenfassung ; Figuren 2,3b ✻ <br><br> --- | 1,2 |

**KLASSIFIKATION DER ANMELDUNG (Int.Cl. ³)**

G 02 F 1/133
      1/01

**RECHERCHIERTE SACHGEBIETE (Int. Cl. ³)**

G 02 F   1/01
          1/133
          1/17
G 01 K 11/16
G 09 F  9/35

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 28-02-1980 | BORMS |

EPA form 1503.1   06.78